# EUROPEAN PATENT APPLICATION

(11) **EP 4 651 454 A1**
(43) Date of publication of application: **19.11.2025**
(21) Application number: 25176139.1
(22) Date of filing: 13.05.2025
(51) Int. Cl.: H04L 41/0631, H04L 41/0654, H04L 41/0677, H04W 24/00

(54) **ACCESS POINT LOOP DETECTION**

(30) Priority: 14.05.2024 US 202463647362 P; 29.04.2025 US 202519193147
(71) Applicant: Juniper Networks, Inc., Sunnyvale, CA 94089-1206 (US)
(72) Inventor: NAGARKAR, Amruta Subhash, Sunnyvale, 94089 (US); CHENG, Linker, Sunnyvale, 94089 (US); WU, Xiaoying, Sunnyvale, 94089 (US)
(74) Representative: D Young & Co LLP

(57) **Abstract**

Techniques are described for determining a root cause of a networking loop that occurred at one or more access points. The techniques include a network management system (NMS) configured to obtain information of a plurality of network devices that indicate a plurality of network events comprising at least a networking loop event that occurred at an access point of the plurality of network devices and one or more network events that occurred at an upstream device to the access point; determine, based on correlating the plurality of network events, whether the one or more network events that occurred at the upstream device is a root cause of the networking loop event; and perform, based on determining that the one or more network events that occurred at the upstream device is a root cause of the networking loop event, an action to remedy the networking loop event.

## Description

### PRIORITY

This application claims the benefit of U.S. Patent Application No. 19/193,147, filed April 29, 2025, and U.S. Provisional Patent Application No. 63/647,362, filed May 14, 2024, the entire contents of which are incorporated herein by reference.

### TECHNICAL FIELD

The disclosure relates generally to computer networks and, more specifically, to detecting, troubleshooting, and remediating network issues.

### BACKGROUND

Commercial premises, such as offices, hospitals, airports, stadiums, or retail outlets, often include a network of wireless access points (APs) installed throughout the premises to provide wireless network services to one or more wireless client devices (or simply, "clients"). APs enable client devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point to access a wired network.

APs and other wired client-side devices are connected, either directly or indirectly, to one or more network devices, such as switches, routers, or the like. In some examples, network devices of an organization may be arranged in a hierarchical network architecture such that one or more APs are connected to one or more network devices in an aggregation layer, such as switches (otherwise referred to as "leaf" or "child" network devices), and the one or more network devices in the aggregation layer are connected to one or more network devices in a core layer, such as switches or gateway devices (otherwise referred to as "spine" or "parent" network devices), which in turn are connected to a core network, e.g., Internet.

### SUMMARY

Particular aspects are set out in the appended independent claims. Various optional embodiments are set out in the dependent claims.

In general, this disclosure describes techniques for determining a root cause of a networking loop that occurred at one or more APs. For example, an AP of a site arranged in accordance with a hierarchical network architecture may receive network traffic (or at least a portion of the network traffic) that was sent by the AP, referred to herein as a "networking loop." The networking loop that occurred at the AP may, in some examples, be caused by an issue that occurred at one or more upstream network devices to the AP, such as a switch and/or gateway device communicatively coupled to the AP. In accordance with the techniques described in this disclosure, a network management system that is configured to provide a cloud-based platform for wireless network management and troubleshooting may correlate network data of the AP (e.g., data indicative of, or associated with, network events that occurred at the AP) that experienced the networking loop and network data of one or more upstream network devices to the AP to determine a root cause of the networking loop that occurred at the AP, and perform an action to remediate the root cause of the networking loop.

For example, an AP may experience and/or detect a networking loop that occurred at a particular period of time and send network data associated with the networking loop to the NMS. One or more upstream network devices to the AP, such as a switch and/or gateway device, may send network data collected and/or measured on or near the same period of time the AP experienced the networking loop. The network data of the one or more upstream network devices may be indicative of a network event that occurred at the one or more upstream network devices that may be the cause of the networking loop that occurred at the AP. The NMS may correlate the network data associated with the networking loop and the network data associated with the one or more upstream network devices to the AP. Based on the correlated network data, the NMS may determine whether a network event that occurred at the one or more upstream network devices is a root cause of the networking loop that occurred at the AP. Based on determining that the network event that occurred at the one or more upstream network devices is the root cause of the networking loop that occurred at the AP, the NMS may perform an action, such as generating and sending a notification that includes an indication of the root cause of the networking loop and/or automatically performing a remedial action to mitigate or resolve issues of the networking loop, such as configuring operation of the one or more upstream network devices to the AP that experienced the AP loop or restarting the one or more upstream network devices.

The techniques disclosed herein may be included in a practical application that provides one or more technical advantages over existing systems. For example, administrators of customer networks (e.g., wireless networks at a site) typically need to manually troubleshoot each upstream network device to identify a root cause of the networking loop. This process of troubleshooting the networking loop is error-prone, dependent on the administrator's subject matter expertise to identify and manually correlate relevant information associated with the networking loop, and time-consuming, which leads to extended periods of network down time and disruption in the network service. By providing an NMS configured to correlate network data of the AP that experienced a networking loop and network data of one or more upstream network devices to the AP to determine a root cause of the networking loop, the troubleshooting and remediation of the networking loop may occur in less time, resulting in less network down time and disruption in the network service.

In one example of the techniques of the disclosure, a network management system comprises memory and one or more processors coupled to the memory, the one or more processors configured to: obtain information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point; determine, based on correlating the plurality of network events, whether the one or more network events that occurred at the upstream device is a root cause of the networking loop event that occurred at the access point; and perform, based on determining that the one or more network events that occurred at the upstream device is a root cause of the networking loop event that occurred at the access point, an action to remedy the networking loop event.

In another example of the techniques of the disclosure, a method comprises obtaining, by a network management system, information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point; determining, by the network management system and based on correlating the plurality of network events, whether the one or more network events that occurred at the upstream device is a root cause of the networking loop event that occurred at the access point; and performing, by the network management system and based on determining that the one or more network events that occurred at the upstream device is a root cause of the networking loop event that occurred at the access point, an action to remedy the networking loop event.

In another example of the techniques of the disclosure, computer-readable media, having instructions thereon that, when executed, cause one or more processors of a network management system (NMS) to: obtain information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point; determine, based on correlating the plurality of network events, whether the one or more network events that occurred at the upstream device is a root cause of the networking loop event that occurred at the access point; and perform, based on determining that the one or more network events that occurred at the upstream device is a root cause of the networking loop event that occurred at the access point, an action to remedy the networking loop event. includes

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a block diagram of an example network system in which a network management system is configured to determine a root cause of a networking loop, in accordance with one or more techniques of the disclosure.
FIG. 1B is a block diagram illustrating further example details of the network system of FIG. 1A.
FIG. 2 is a block diagram of an example access point device, in accordance with one or more techniques of the disclosure.
FIG. 3 is a block diagram of an example network management system, in accordance with one or more techniques of the disclosure.
FIG. 4 is a block diagram of an example user equipment device in accordance with one or more techniques of the disclosure.
FIG. 5 is a block diagram of an example network node, in accordance with one or more techniques of the disclosure.
FIG. 6 is an example of determining a VLAN configuration issue of an upstream network device to an AP is a root cause of a networking loop that occurred at the AP, in accordance with one or more techniques of this disclosure.
FIG. 7 is an example of determining a port flapping issue of an upstream network device to an AP is a root cause of a networking loop that occurred at the AP, in accordance with one or more techniques of this disclosure.
FIG. 8 is a flow chart illustrating an operation of a network management system configured to determine a root cause of a networking loop, in accordance with one or more techniques of this disclosure.

### DETAILED DESCRIPTION

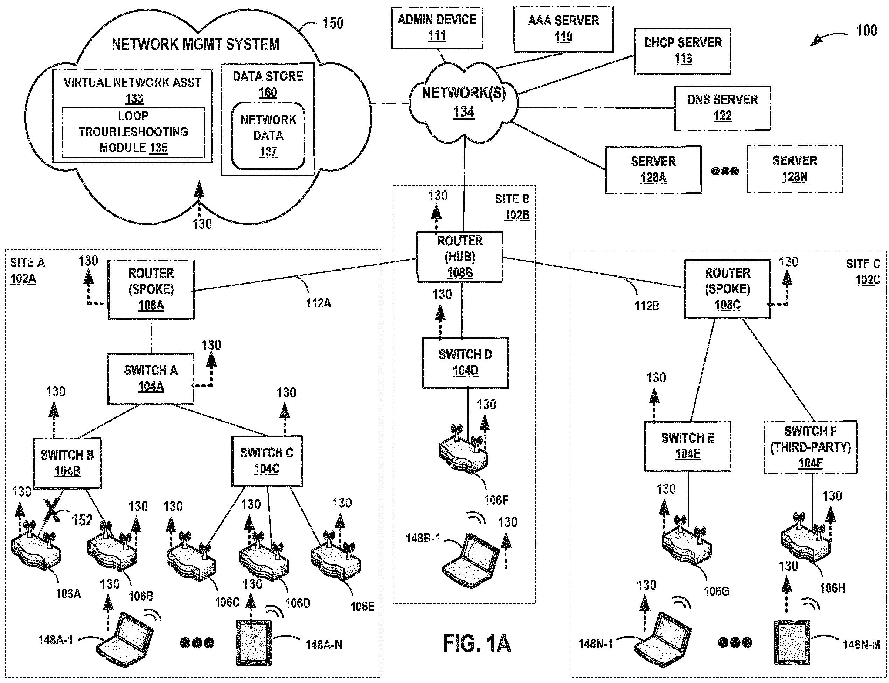

FIG. 1A is a block diagram of an example network system 100 in which a network management system (NMS) 150 is configured to determine a root cause of a networking loop, in accordance with one or more techniques of the disclosure. Example network system 100 includes a plurality sites 102A-102C (collectively, "sites 102") at which a network service provider manages one or more wireless networks, respectively. In the example shown in FIG. 1A, sites 102A-102C are arranged in a "hub and spoke" architecture, with site 102B being the hub site and sites 102A and 102C being spoke sites. As an example, the organization may be a large corporation with multiple campuses, where each campus may be a site. A site may refer to a geographic location. For example, the organization may have sites in different cities, sites that are different campuses within a city, sites that are different buildings within a campus, etc. In some examples, network topologies other than hub and spoke may be used. For example, the network may be a partial mesh topology, a full mesh topology, or other network topology. Further, the network topology may be a hybrid topology. For example, the hubs and sites may be arranged in a hub and spoke topology while internal to a site, the network may have a mesh topology.

Each of sites 102A-102C includes a plurality of network access server (NAS) devices, such as access point devices (APs) 106A-106H (collectively, "APs 106"), switches 104A-104F (collectively, "switches 104"), and routers 108A-108C (collectively, "routers 108"), respectively. For example, each of sites 102A-102C may include one or more APs that may represent any type of wireless access point, including, but not limited to, a commercial or enterprise AP, a router, or any other device that is connected to a wired network and is capable of providing wireless network access to client devices within the site. In this example, site 102A includes a plurality of APs 106A-106E, site 102B includes AP 106F, and site 102C includes AP 106G-106H.

Each of sites 102A-102C also includes one or more client devices, otherwise known as user equipment devices (UEs), referred to generally as client devices 148 or UEs 148, representing various wireless-enabled devices within each site. For example, UEs 148A-1 through 148A-N ("UEs 148A") are located at site 102A. UEs 148B-1 is currently located at site 102B. Similarly, a plurality of UEs 148N-1 through 148N-M are currently located at site 102C. A UE 148 may be any type of wireless client device, including, but not limited to, a mobile device such as a smart phone, tablet or laptop computer, a personal digital assistant (PDA), a wireless terminal, a smart watch, smart ring or other wearable device. A UE 148 may also be an IoT device such as a printer, security device, environmental sensor, appliance, or any other device configured to communicate over one or more wireless networks.

In order to provide wireless network services to UEs 148 and/or communicate over wireless networks, APs 106 and other wired client-side devices at sites 102 (e.g., switches, routers, or the like) are connected, either directly or indirectly, to one or more network devices via physical cables, e.g., Ethernet cables. In the example of FIG. 1A, site 102A includes APs 106A-106E communicatively coupled to UE 148A-1 through UE 148A-N, respectively. In this example, APs 106A-106E are communicatively coupled to switches 104A-104C, respectively, that are arranged in a hierarchical network architecture where switch 104B and switch 104C are in an aggregation layer and are communicatively coupled to APs 106A-106E and switch 104A, and switch 104A is in a core layer and communicatively coupled to switches 104B-104C and router 108A. Router 108A at site 102A is configured as a spoke router and may communicate with router 108B configured as a hub router at site 102B via wide area network (WAN) link 112A. Similarly, site 102B includes AP 106F communicatively coupled to switch 104D that is communicatively coupled to router 108B. Likewise, site 102C includes AP 148N-1 through 148N-M that are communicatively coupled to switch 104E and switch 104F, respectively, that are each connected to router 108C configured as a spoke router at site 102C and may communicate with router 108B at site 102B via WAN link 112B. Router 108B in site 102B may communicate with a wide area network (e.g., the Internet), such as network 134. Each of sites 102 is merely an example network architecture and may alternatively include more or fewer switches and/or routers, and/or arranged in other network topologies.

Example network system 100 also includes various networking components for providing networking services within the wired network including, as examples, an Authentication, Authorization and Accounting (AAA) server 110 for authenticating users and/or client devices, a Dynamic Host Configuration Protocol (DHCP) server 116 for dynamically assigning network addresses (e.g., IP addresses) to client devices upon authentication, a Domain Name System (DNS) server 122 for resolving domain names into network addresses, a plurality of servers 128A-128N (e.g., web servers, databases servers, file servers and the like. References to "N" or "M" may represent any number. References to "N" for different elements need not be the same number. Similarly, references to "M" for different elements need not be the same number.

In the example of FIG. 1A, NMS 150 is a cloud-based computing platform that manages wireless networks at one or more of sites 102. As further described herein, NMS 150 provides an integrated suite of wireless network management tools and implements various techniques of the disclosure. In general, NMS 150 may provide a cloud-based platform for wireless network data acquisition, monitoring, activity logging, reporting, predictive analytics, network anomaly identification, and alert generation. In some examples, NMS 150 uses a combination of artificial intelligence, machine learning, and data science techniques to optimize user experiences and simplify operations across any one or more of wireless access, wired access, and SD-WAN domains. In some examples, NMS 150 outputs notifications, such as alerts, alarms, graphical indicators on dashboards, log messages, text / short messaging service (SMS) messages, email messages, and the like, and/or recommendations regarding wireless network issues to a site or network administrator ("admin") interacting with and/or operating admin device 111. Additionally, in some examples, NMS 150 operates in response to configuration input received from the administrator interacting with and/or operating admin device 111.

In accordance with one specific implementation, a computing device is part of NMS 150. In accordance with other implementations, NMS 150 may comprise one or more computing devices, dedicated servers, virtual machines, containers, services, or other forms of environments for performing the techniques described herein. Similarly, computational resources and components implementing VNA 133 may be part of the NMS 150, may execute on other servers or execution environments, or may be distributed to nodes within network 134 (e.g., routers, switches, controllers, gateways, and the like).

The administrator and admin device 111 may comprise IT personnel and an administrator computing device, respectively, associated with one or more of sites 102. Admin device 111 may be implemented as any device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 150 such that admin device 111 may communicate with NMS 150 via network 134 or other means of communication.

Each one of the network devices of network system 100, e.g., servers 110, 116, 122 and/or 128, APs 106, UEs 148, switches 104, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 106, UEs 148, switches 104, and routers 108 may be considered "third-party" network devices when owned by and/or associated with a different entity than NMS 150 such that NMS 150 does not receive, collect, or otherwise have access to the recorded status and other data of the third-party network devices. In some examples, sites 102 may include edge devices (not shown in FIG. 1A) that comprise cloud-managed, wireless local area network (LAN) controllers. Each of the edge devices may comprise an on-premises device at a site 102 that is in communication with NMS 150 to extend certain microservices from NMS 150 to the on-premises NAS devices while using NMS 150 and its distributed software architecture for scalable and resilient operations, management, troubleshooting, and analytics. In these examples, the edge device may be configured to provide a proxy through which the recorded status and other data of the third-party network devices may be reported to NMS 150.

In some examples, NMS 150 observes, obtains, and/or receives network data 130 of network devices within each site 102A-102C, respectively, to deliver a high-quality wireless experience to end users, IoT devices, and client devices at the site. NMS 150 may obtain network data 130 using a "push" model or a "pull" model. In a pull model, NMS 150 may poll network devices in network system 100 and request that the network devices send their respective network data 130 to NMS 150. In a push model, the various network devices of network system 100 periodically send network data 130 to NMS 150 without NMS 150 having to request network data 130. In some examples, each device of switches 104, APs 106, routers 108, and client devices 148 may form a connection between the respective device and NMS 150. In some examples, each connection may include a socket (e.g., an HTTPS kernel) to enable each device of switches 104, APs 106, routers 108, and/or client devices 148 to send network data 130 to NMS 150. In some examples, a UE 148 may communicate directly with NMS 150 when the client device downloads a software development kit (SDK). The SDK may enable the UE 148 to send network data 130 and/or directly to NMS 150, e.g., via an application programming interface (API), without sending the data via switches 104, APs 106, and/or routers 108.

Network data 130 may take the form of data extracted from messages, counters, and statistics, for example. Network data 130 may be collected and/or measured by one or more network devices of sites 102, such as APs 106, switches 104, and/or routers 108. NMS 150 may obtain network data 130 and store the network data in data store 160, such as network data 137 within NMS 150 or, alternatively, in an external data store.

Network data 130 may vary depending on the type of device providing the information. In some examples, network data 130 of APs 106 may include information of APs 106, such as information indicative of network performance, connectivity, status, and/or other information indicative of a network event or issue of APs 106. For example, network data 130 of AP 106A may include data indicative of the connectivity of AP 106A to other devices, such as information identifying the devices connected to AP 106A, a connectivity status to the other devices, port status of AP 106A, network telemetry data of connections of AP 106A (e.g., number of bytes sent/received), network events that occurred at AP 106A (e.g., detected issues), etc. For example, AP 106A may collect and/or measure network data 130 including information identifying switch 104B and UE 148A-1 are connected to AP 106A, connectivity status to switch 104B and to UE 148A-1, status of a port connecting AP 106A to switch 104B, network telemetry data of traffic communicated to or from AP 106A and switch 104B or traffic communicated to or from AP 106A and UE 148A-1, network events that occurred at AP 106A, and/or any other information associated with AP 106A.

Network data 130 of switches 104 may include information of switches 104, such as information indicative of network performance, connectivity, status, and/or other information indicative of a network event or issue of switches 104. For example, network data 130 of switch 104B may include data indicative of the connectivity of switch 104B to other network devices, such as information identifying the devices connected to switch 104B, a connectivity status to the other devices, port status of switch 104B, network telemetry data of connections of switch 104B, configuration status, topology status, and/or other information indicative of a network event or issue of switch 104B. For example, switch 104B may collect and/or measure network data 130 including information identifying AP 106A and switch 104A are connected to switch 104B, connectivity status to AP 106A and to switch 104A, status of a port connecting switch 104B to AP 106A or a port connecting switch 104B to switch 104A, network telemetry data of traffic communicated to or from switch 104B and AP 106A or traffic communicated to or from switch 104B and switch 104A, information associated with a software configuration of switch 104B (e.g., firmware configuration status), information associated with a network topology configuration of switch 104B (e.g., port configuration, VLAN configuration, etc.), and/or any other information associated with switch 104B. Similarly, switch 104A may collect and/or measure network data 130 including information identifying switch 104B and/or router 108A are connected to switch 104A, connectivity status to switch 104B and to router 108A, status of a port connecting switch 104A to switch 104B or a port connecting switch 104A to router 108A, network telemetry data of traffic communicated to or from switch 104A and switch 104B or traffic communicated to or from switch 104A and router 108A, information associated with a software configuration of switch 104A (e.g., firmware configuration status), information associated with a network topology configuration of switch 104A (e.g., port configuration, VLAN configuration, etc.), and/or any other information associated with switch 104A.

Network data 130 of gateway devices, e.g., routers 108, may include information of routers 108, such as information indicative of network performance, connectivity, status, and/or other information indicative of a network event or issue of routers 108. For example, network data 130 of router 108A may include data indicative of the connectivity of router 108A to other network devices, such as information identifying the devices connected to router 108A, a connectivity status to the other devices, port status of router 108A, network telemetry data of router 108A, configuration status, etc. For example, router 108A may collect and/or measure network data 130 including information identifying switch 104A and router 108B are each connected to router 108A, connectivity status to switch 104A and to router 108B, status of a port connecting router 108A to switch 104A or a port connecting router 108A to router 108B, network telemetry data of traffic communicated to or from router 108A and switch 104A or traffic communicated to or from router 104A and router 108B, information associated with a software configuration of router 108A (e.g., firmware configuration status), information associated with a network topology configuration of router 108A (e.g., port configuration, VLAN configuration, etc.), and/or any other information associated with router 108A.

Network data 130 of routers 108 may also include information regarding wired connections and virtual or logical connections. For example, one or more routers 108 may establish one or more logical paths (e.g., peer paths or tunnels) over a WAN with one or more other network devices on a single physical interface. Each of routers 108 may report path data collected at a logical path level to NMS 150 and/or the path data may be retrieved from the network devices by NMS 150. In some examples, network data 130 may include labels identifying the network device associated with the logical path, and/or information associated with the logical path (e.g., peer path status, network telemetry data indicative of the performance of the peer path, etc.).

NMS 150 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 106, switches 104, routers 108, and/or nodes within network 134. For example, VNA 133 of NMS 150 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 150 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and automatically improving the user network experience.

Further example details of operations implemented by the VNA 133 of NMS 150 are described in U.S. Patent No. 9,832,082, issued November 28, 2017, and entitled "Monitoring Wireless Access Point Events," U.S. Patent No. 11,570,038, issued January 31, 2023, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In some examples, one or more APs 106 may receive network traffic (or at least a portion of the network traffic) that was sent by the AP, referred to herein as a "networking loop." In a hierarchical networking architecture, such as in site 102A, networking loop 152 that occurred at AP 106A may be caused by one or more network events that occurred at one or more upstream network devices to AP 106A, such as switch 104B, switch 104A, and/or router 108A that are communicatively coupled to AP 106A.

In accordance with the techniques described in this disclosure, NMS 150 may include a loop troubleshooting module 135 configured to correlate network data of an AP that experienced and/or detected a networking loop and network data of one or more upstream network devices to the AP to determine a root cause of the networking loop that occurred at the AP, and perform an action, such as generating and sending a notification to an administrator of the network and/or automatically remediating the root cause of the networking loop.

For example, AP 106A of site 102A may detect (or NMS 150 may detect) networking loop 152 at a particular period of time and collect and/or measure network data 130 associated with networking loop 152. For example, AP 106A or NMS 150 may be configured to collect and analyze network data of AP 106A and detect the presence of network loops based on: (1) detected "reflections," where a "reflection" is an occurrence of an event where AP 106A receives an inbound network packet that AP 106A previously forwarded; (2) detected increased levels of control plane traffic associated with a spanning tree protocol (STP), where such increased levels are classified by AP 106A or NMS 150 as anomalous and may be indicative of a failure of the network switching devices to be able to resolve the presence of a physical network loop using STP, and/or (3) data indicative of user impact or user experience due to traffic looping, where such data is classified by AP 106A or NMS 150 as anomalous, such as detecting an unexpectedly high proportion of BUM traffic relative to unicast traffic, which may be indicative of traffic looping in the network. Additional examples of detecting networking loops are described in U.S. Application No. 17/812,676, entitled "Detecting Network Events Having Adverse User Impact," filed July 14, 2022, the entire contents of which is incorporated by reference herein.

Network data 130 associated with networking loop 152 may include information such as the period of time networking loop 152 was detected, information identifying AP 106A and/or a port of AP 106A that experienced networking loop 152, information identifying the packet associated with networking loop 152, and/or other information associated with AP 106A that experienced networking loop 152. On or near the same period of time AP 106A detected networking loop 152, network devices within site 102A, such as switches 104A-104C and/or router 108A, may collect and/or measure network data indicative of the network devices, such as a status of one or more ports, status of configuration, status of connectivity, and/or other information of the network devices.

NMS 150 may obtain network data 130 collected and/or measured by network devices of site 102A on or around the same period of time that the networking loop was detected by AP 106A. In this example, NMS 150 may obtain network data 130 from switches 104A-104C and/or router 108A.

Loop troubleshooting module 135 of NMS 150 may correlate network data 130 of one or more upstream network devices to AP 106A, such as switches 104A-104B and/or router 108A, and network data 130 of AP 106A associated with networking loop 152 to determine whether a network event that occurred at one or more of the upstream network devices to AP 106A is a root cause of networking loop 152. For example, loop troubleshooting module 135 may determine, based on a networking graph of site 102A (e.g., from a graph database specifying topology information of network devices of site 102A), that switch 104A, switch 104B, and router 108A are upstream network devices to AP 106A. Based on determining that switch 104A, switch 104B, and router 108A are upstream network devices to AP 106A, loop troubleshooting module 135 may correlate network data 130 of the one or more upstream network devices that were collected and/or measured on or near the same time networking loop 152 occurred at AP 106A.

Loop troubleshooting module 135 may determine, based on the correlated network data 130 of AP 106A and network data 130 of the one or more upstream network devices to AP 106A, whether a network event that occurred at the one or more upstream network devices is a root cause of networking loop 152. As further described below, a network event that occurred at the one or more upstream network devices to AP 106A may include, for example, a port flapping issue (e.g., port of upstream network device switching from an up state to a down state), a configuration issue (e.g., virtual LAN missing or misconfigured on upstream network device), a network topology change (e.g., configuration of LAN with redundant paths may introduce physical loops in the network topology, addition of switch or other device that is misconfigured or incorrectly connected when deployed may introduce loops, etc.), or other network event that occurred at an upstream network device to AP 106A that may cause traffic originally sent by AP 106A to be sent back to AP 106A.

Based on determining that a network event that occurred at the one or more upstream network devices to AP 106A is the root cause of networking loop 152, loop troubleshooting module 135 may cause NMS 150 to perform an action, such as generating and sending a notification that includes an indication of the root cause of networking loop 152 and/or a recommendation to remedy networking loop 152, and/or automatically perform a remedial action to mitigate or resolve issues of networking loop 152, such as configuring operation of the one or more upstream network devices to AP 106A (e.g., correcting VLAN configuration issue or port flapping issue), resetting or restarting the one or more upstream network devices, etc.

Although the techniques of the present disclosure are described in this example as being performed by NMS 150, techniques described herein may be performed by any other computing device(s), system(s), and/or server(s), and that the disclosure is not limited in this respect. For example, one or more computing device(s) configured to execute the functionality of the techniques of the disclosure may reside in a dedicated server or be included in any other server (such as any of servers 128A-128N) in addition to or other than NMS 150, or may be distributed throughout network system 100, and may or may not form a part of NMS 150.

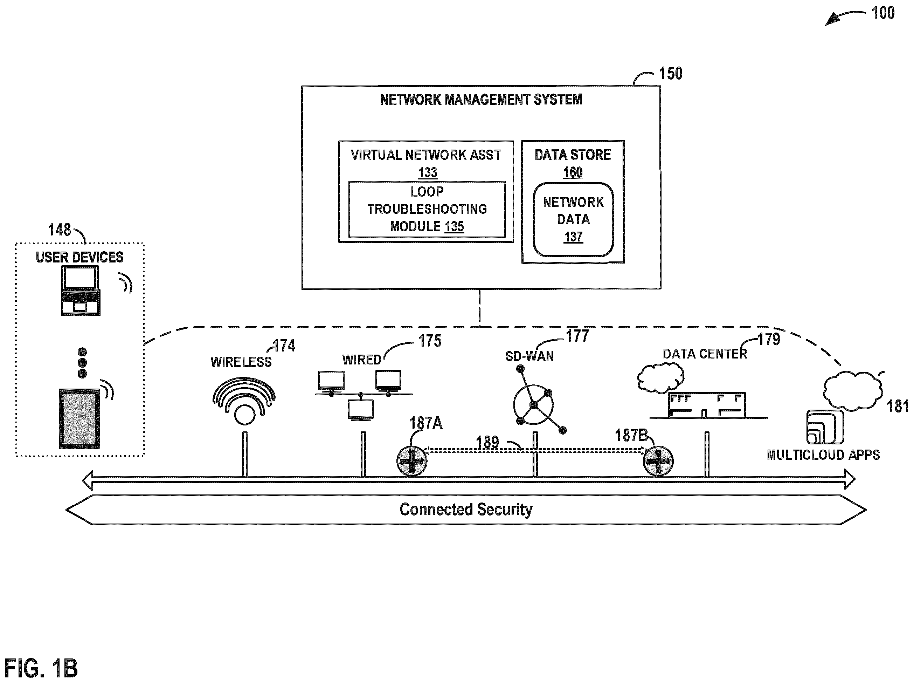

FIG. 1B is a block diagram illustrating further example details of the network system of FIG. 1A. In this example, FIG. 1B illustrates NMS 150 configured to operate according to an artificial intelligence / machine-learning-based computing platform providing comprehensive automation, insight, and assurance (WiFi Assurance, Wired Assurance and WAN assurance) spanning from wireless network 174 and wired LAN 175 networks at the network edge (far left of FIG. 1B) to cloud-based application services 181 hosted by computing resources within data centers 179 (far right of FIG. 1B).

As described herein, NMS 150 provides an integrated suite of management tools and implements various techniques of this disclosure. In general, NMS 150 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-drive RF optimization with reinforcement learning.

As illustrated in the example of FIG. 1B, AI-driven NMS 150 also provides configuration management, monitoring and automated oversight of software defined wide-area network (SD-WAN) 177, which operates as an intermediate network communicatively coupling wireless networks 174 and wired LANs 175 to data centers 179 and application services 181. In general, SD-WAN 177 provides seamless, secure, traffic-engineered connectivity between "spoke" routers 187A of edge wired networks 175 hosting wireless networks 174, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by user devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent Application Publication No. 2020/0403890, entitled "IN-LINE PERFORMANCE MONITORING," published on December 24, 2020, the entire content of each of which is incorporated herein by reference in its entirety.

In some examples, AI-driven NMS 150 may enable intent-based configuration and management of network system 100, including enabling construction, presentation, and execution of intent-driven workflows for configuring and managing devices associated with wireless networks 174, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in US Patent 10,756,983, entitled "Intent-based Analytics," and US Patent 10,992,543, entitled "Automatically generating an intent-based network model of an existing computer network," each of which is hereby incorporated by reference.

In accordance with the techniques described in this disclosure, NMS 150 may obtain network data 130 collected and/or measured by one or more network devices of a site (e.g., site 102A of FIG. 1A), such as one or more network devices of wireless network 174 (e.g., APs 106 of FIG. 1A), one or more network devices of wired network 175 (e.g., switches 104 of FIG. 1A), one or more network devices of SD-WAN 177 (e.g., "hub" and "spoke" routers 108 of FIG. 1A), and/or one or more servers hosting cloud-based application services 181 of data center 179 (e.g., servers 110, 116, 122, and/or 128 of FIG. 1A).

As described above, NMS 150 may obtain network data associated with a networking loop that occurred at an AP of wireless network 174 and network data associated with network events that occurred at one or more upstream network devices to the AP, such as network devices in wired network 175, SD-WAN 177, and/or data center 179. Loop troubleshooting module 135 of NMS 150 may correlate the network data of one or more upstream network devices to the AP in wireless network 174 (e.g., switches in wired network 175 and/or routers 187 in SD-WAN 177) and network data of the AP that experienced the networking loop to determine whether a network event that occurred at the one or more upstream network devices to the AP is a root cause of the networking loop. Loop troubleshooting module 135 may determine, based on the correlated network data of the AP that experienced the networking loop and network data of the one or more upstream network devices to the AP, that a network event that occurred at the one or more upstream network devices is a root cause of the networking loop, and may cause NMS 150 to perform an action, such as generating and sending a notification to an administrator of the network and/or automatically remediating the root cause of the networking loop.

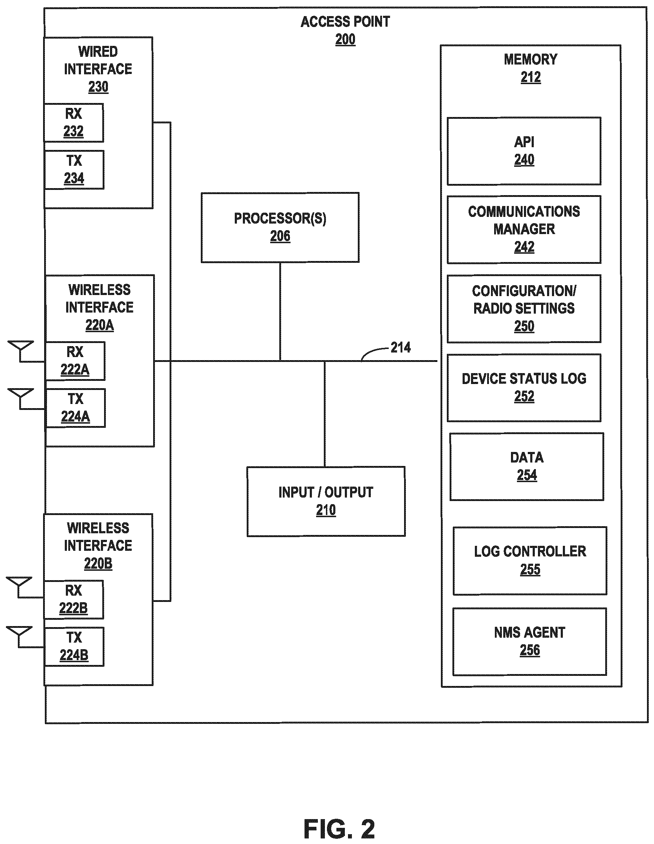

FIG. 2 is a block diagram of an example access point 200 configured in accordance with one or more techniques of the disclosure. Example AP 200 shown in FIG. 2 may represent an example implementation of any of APs 106 as shown and described herein with respect to FIG. 1A. AP 200 may comprise, for example, a Wi-Fi, Bluetooth and/or Bluetooth Low Energy (BLE) base station or any other type of wireless access point.

In the example of FIG. 2, AP 200 includes a wired interface 230, wireless interfaces 220A-220B, one or more processor(s) 206, memory 212, and input/output (I/O) 210, coupled together via a bus 214 over which the various elements may exchange data and information. Wired interface 230 represents a physical network interface and includes a receiver 232 and a transmitter 234 for receiving and sending network communications, e.g., packets. Wired interface 230 couples AP 200, either directly or indirectly, to one or more switches 104 to access network(s) 134 of FIG. 1A.

Wireless interfaces 220A and 220B represent wireless network interfaces and include receivers 222A and 222B, respectively, each including a receive antenna via which AP 200 may receive wireless signals from wireless communication devices (e.g., any of UEs 148 of FIG. 1A), such as laptop computers, smartphones, tablets, wearable devices, appliances, Internet of Things (IoT) devices, and/or other wireless communication devices. Wireless interfaces 220A and 220B further include transmitters 224A and 224B, respectively, each including transmit antennas via which AP 200 may transmit wireless signals to wireless communication devices. In some examples, wireless interfaces 220A and 220B may communicate with wireless interfaces of other APs (e.g., any of APs 106 of FIG. 1A). In some examples, wireless interface 220A may include a Wi-Fi 802.11 interface (e.g., 2.4 GHz and/or 5 GHz). Wireless interface 220B may include a Bluetooth interface and/or a Bluetooth Low Energy (BLE) interface. However, these are given for example purposes only, and the disclosure is not limited in this respect. In some examples, AP 200 may communicate with other access points using a Bluetooth and/or BLE interface.

Processor(s) 206 are programmable hardware-based processors configured to execute software instructions, such as those used to define a software or computer program. Software instructions may be stored to a computer-readable storage medium (such as memory 212), such as non-transitory computer-readable media including a storage device (e.g., a disk drive, or an optical drive) or a memory (such as Flash memory or RAM) or any other type of volatile or non-volatile memory, that stores instructions to cause the one or more processors 206 to perform one or more of the techniques described herein. Software instructions may also or alternatively be provided to the processor via a computer readable transmission medium (such as bus 214, wired interface 230 and/or wireless interface 220), that conveys instructions to cause the one or more processors 206 to perform one or more of the techniques described herein.

Memory 212 includes one or more devices configured to store programming modules and/or data associated with operation of AP 200. For example, memory 212 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 206 to perform one or more of the techniques described herein.

In this example, memory 212 stores executable software including an application programming interface (API) 240, a communications manager 242, configuration settings 250, a device status log 252 data 254, log controller 255, and NMS agent 256. Device status log 252 includes a list of network parameters and/or network events specific to AP 200. The network parameters may include, for example, any network parameter indicative of one or more aspects of performance of the wireless network. In some examples, network parameters may include a plurality of states measured periodically as time series data that can be translated into one or more SLE metrics. The network parameters may be measured by the client devices, the APs 106/200, or another device associated with the wireless network.

Network events may include, for example, access point events and/or client device events. The access point events and/or client device events may each include a log of normal network events, neutral network events, and/or error network events. The network events may include, for example, memory status, reboot events, crash events, Ethernet port status, upgrade failure events, firmware upgrade events, configuration changes, authentication events, DNS events, DHCP events, roaming events, networking loop events, etc., as well as a time and date stamp for each event. Log controller 255 determines a logging level for the device based on instructions from NMS 150. Data 254 may store any data used and/or generated by AP 200, including data collected from client devices of AP 200, such as data used to calculate one or more SLE metrics, that is transmitted by AP 200 for cloud-based management of wireless networks by NMS 150.

Communications manager 242 includes program code that, when executed by processor(s) 206, allow AP 200 to communicate with client devices and/or network(s) 134 via any of interface(s) 230 and/or 220A-220B. Configuration settings 250 include any device settings for AP 200 such as radio settings for each of wireless interface(s) 220A-220B. These settings may be configured manually or may be remotely monitored and managed by NMS 150 to optimize wireless network performance in real-time, or on a periodic (e.g., hourly or daily) basis.

I/O 210 represents physical hardware components that enable interaction with a user, such as buttons, a touchscreen, a display and the like. Although not shown, memory 212 typically stores executable software for controlling a user interface with respect to input received via I/O 210.

As described herein, AP 200 may measure and report network data (e.g., network parameters and/or network event data) from device status log 252 to NMS 150. The network data is indicative of one or more aspects of wireless network performance and/or status of the wireless network. The network data may be measured and/or determined by one or more of the client devices of an AP 200 and/or by one or more of the APs 200 in a wireless network. AP 200 can provide the network data to NMS 150 for use in the techniques described herein.

In some examples, NMS agent 256 may periodically create a package of the statistical data according to a second periodic interval. In some examples, the package of statistical data may include, in addition to details about AP 200, details about client devices connected to AP 200. NMS agent 256 may then report the package of statistical data to NMS 150. In other examples, NMS 150 may request, retrieve, or otherwise receive the package of statistical data from AP 200 via an API, an open configuration protocol, or another of communication protocols. The package of statistical data created by NMS agent 256 or another module of AP 200 may include a header identifying AP 200 and the statistics and data samples. In still other examples, NMS agent 256 reports event data to NMS 150 in response to the occurrence of certain events at AP 200 as the events happen.

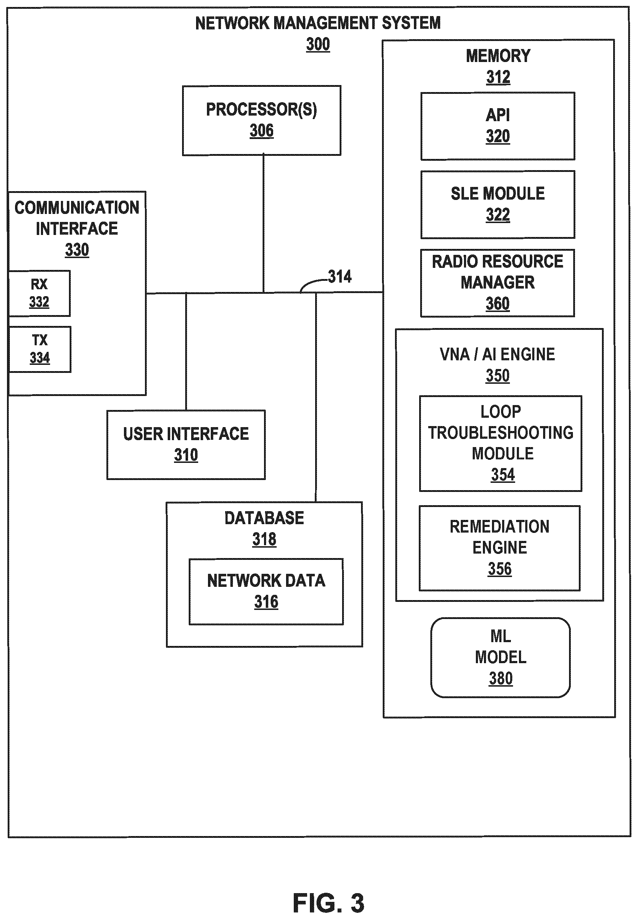

FIG. 3 is a block diagram of an example network management system (NMS) 300 configured to operate in accordance with one or more techniques of the disclosure. NMS 300 may represent an example implementation of NMS 150 in FIGS. 1A and 1B. In such examples, NMS 300 is responsible for monitoring and management of one or more networks at sites 102A-102C of FIG. 1A, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of APs 106 (and in some examples, the UEs 148 associated with APs 106), switches 104, routers 108, and other network devices of sites 102A-102C of FIG. 1A, which may be used to determine network connectivity, to calculate one or more SLE metrics, and/or update network topology. NMS 300 analyzes this data for cloud-based management of the wired and wireless networks of sites 102A-102C. The received data, including network data 130, is stored as network data 316 in database 318. In some examples, NMS 300 may be part of another server shown in FIG. 1A or a part of any other server.

Processor(s) 306 execute software instructions, such as those used to define a software or computer program. Software instructions may be stored to a computer-readable storage medium (such as memory 312), such as non-transitory computer-readable media including a storage device (e.g., a disk drive, or an optical drive) or a memory (such as Flash memory or RAM) or any other type of volatile or non-volatile memory, that stores instructions to cause the one or more processors 306 to perform the techniques described herein. Software instructions may also or alternatively be provided to the processor via a computer readable transmission medium (such as bus 314 and/or communication interface 330), that conveys instructions to cause the one or more processors 306 to perform one or more of the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of APs 106, switches 104, routers 108, servers 110, 116, 122, 128 and/or any other network nodes, devices, or systems forming part of network system 100 such as shown in FIG. 1A. In some examples described herein in which network system 100 includes "third-party" network devices that are owned and/or associated with different entities than NMS 300, NMS 300 may obtain network data from the third-party network devices through a proxy (e.g., edge device) communicatively coupled to the third-party network devices.

NMS 300 may obtain data and information including, for example, network data (e.g., network data 130 of FIG. 1A), SLE-related data, or event data received from one or more of APs 106, switches 104, routers 108, or other network devices to remotely monitor the performance of wired and wireless networks at sites 102A-102C. NMS 300 may further transmit data via communications interface 330 to any of network devices such as APs 106, switches 104, routers 108, other network devices within the wired and wireless networks at sites 102A-102C, and/or admin device 111 to remotely manage the wired and wireless networks.

Memory 312 includes one or more devices configured to store programming modules and/or data associated with operation of NMS 300. For example, memory 312 may include a computer-readable storage medium, such as a non-transitory computer-readable media including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In the example shown in FIG. 3, memory 312 includes an API 320, an SLE module 322, a virtual network assistant (VNA)/AI engine 350, and a radio resource management (RRM) engine 360.

SLE module 322 enables set up and tracking of thresholds for SLE metrics for each wired and wireless networks at sites 102A-102C. SLE module 322 further analyzes SLE-related data collected by network devices, such as any of APs 106, switches 104, and routers 108. SLE module 322 may further analyze data from client devices in each wireless network of sites 102A-102C. This data is transmitted to NMS 300, which executes SLE module 322 to determine one or more SLE metrics for APs 106, switches 104, and routers 108. This SLE data can be stored as, for example, network data 316 in database 318.

RRM engine 360 monitors one or more metrics for each site 102A-102C to learn and optimize the network environment at each site. For example, RRM engine 360 may monitor the coverage and capacity SLE metrics for a wireless network at a site 102 to identify potential issues with SLE coverage and/or capacity in the wireless network and to make adjustments to the radio settings of the access points at each site to address the identified issues. For example, RRM engine may determine channel and transmit power distribution across all APs 106 in each wireless network at sites 102A-102C. For example, RRM engine 360 may monitor events, power, channel, bandwidth, and number of clients connected to each AP 106. RRM engine 360 may further automatically change or update configurations of one or more APs 106 at a site 102 with an aim to improve the coverage and capacity SLE metrics and thus to provide an improved wireless experience for the user.

In accordance with the disclosed techniques, VNA/AI engine 350 includes loop troubleshooting module 354 configured to determine a root cause of a networking loop, as described herein. Loop troubleshooting module 354, in some examples, may correlate network data of an AP that experienced a networking loop (e.g., AP 106A of FIG. 1A) and network data of one or more upstream network devices to the AP that experienced the networking loop (e.g., switches 104A-104B and/or router 108A of FIG. 1A) to determine whether a network event that occurred at the one or more of the upstream network devices is a root cause of the networking loop experienced by AP 106A.

As one example, AP 106A (or NMS 300) may determine a networking loop that occurred at AP 106A. Loop troubleshooting module 354 may determine, based on a networking graph specifying topology information of network devices of a site, one or more upstream network devices to AP 106A. NMS 300 may identify neighboring network devices based on information associated with wireless signals exchanged between wireless communication devices (e.g., signal strength measurements such as Received Signal Strength Indicator (RSSI) values) and/or information obtained via a discovery protocol (e.g., Link Layer Discovery Protocol) to determine neighboring network devices and generate a network graph (e.g., data in a network graph database) identifying the neighbor relationships of each of the network devices.

Based on determining switches 104A-104B and/or router 108A are upstream network devices to AP 106A, loop troubleshooting module 354 may, as one example, correlate network data of the upstream network devices having a time stamp (or occurred within the same time window) of the networking loop event detected by AP 106A to determine whether the network data of the upstream network devices may indicate a network event that may cause the networking loop that occurred at AP 106A.

An example of the correlated data and identified root cause (e.g., as a JSON file) is illustrated below:

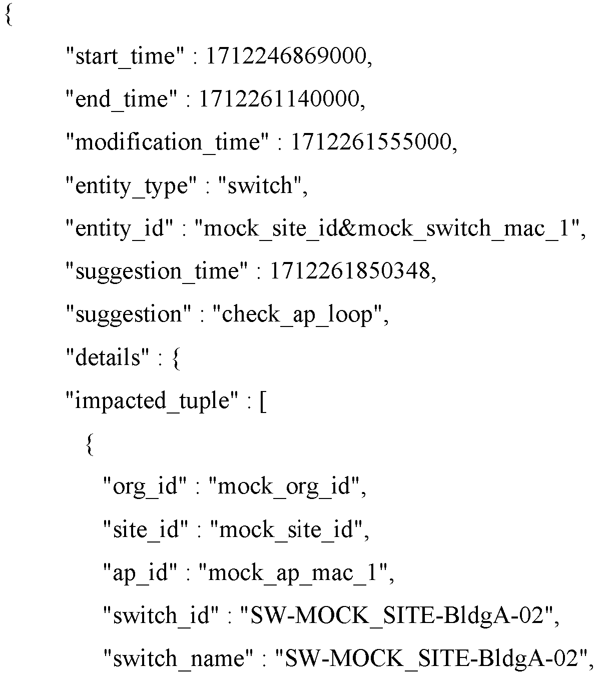

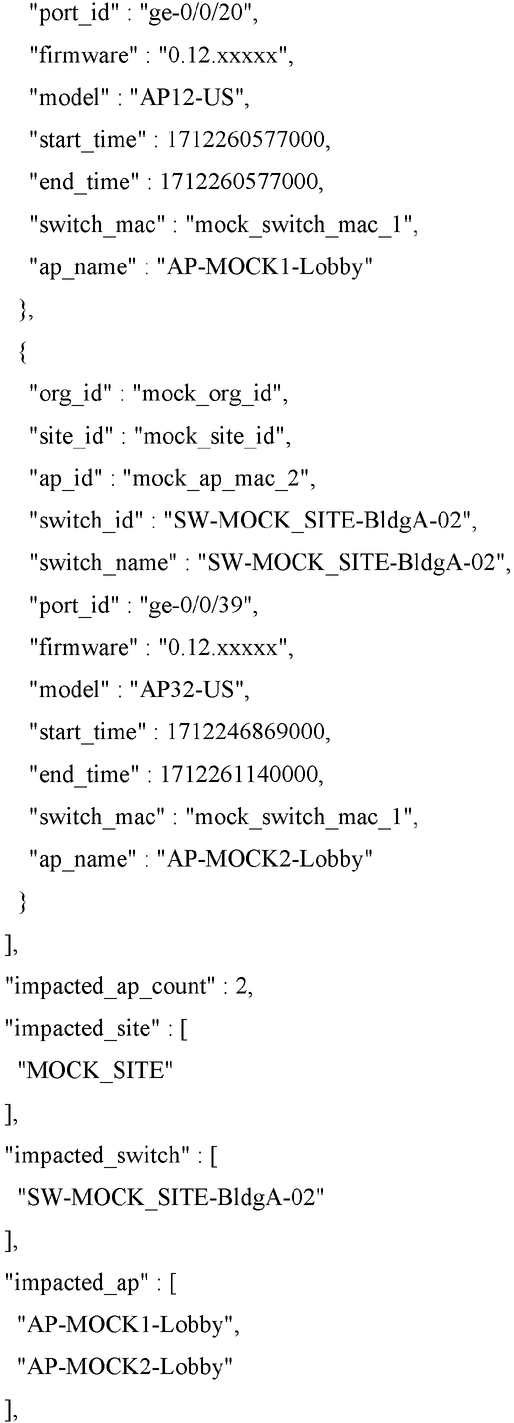

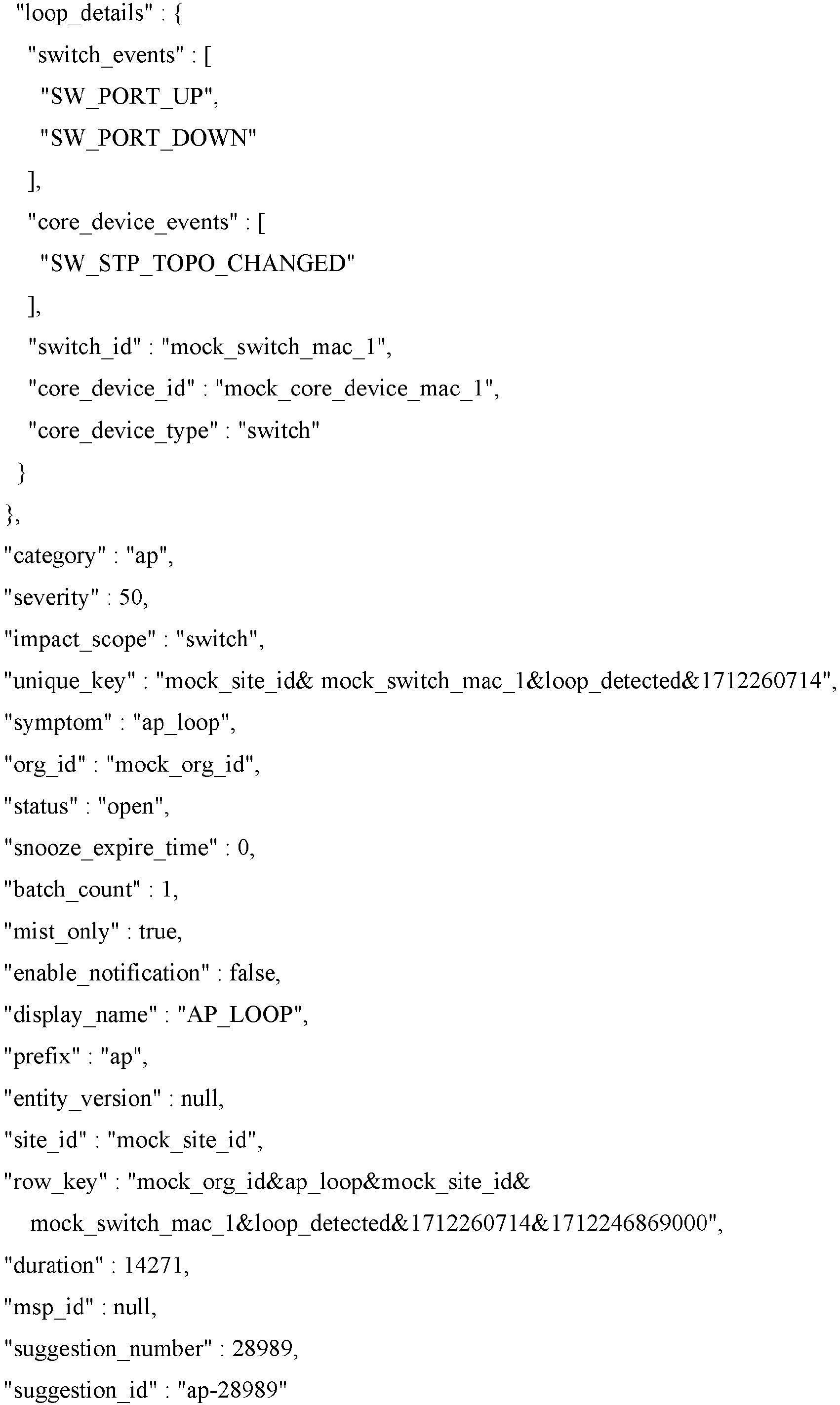

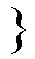

In the example correlated network data illustrated above, loop troubleshooting module 354 may correlate network data 130 of APs (e.g., "mock_ap_mac1" and "mock_ap_mac2") that experienced a networking loop (e.g., and network data 130 of an upstream network device (e.g., child switch "mock_switch_mac_1" and core switch "mock_core-device_mac_1") to the APs. In this example, network data 130 of the upstream network device may indicate a port flapping event (e.g., "SW_PORT_UP" and "SW_PORT_DOWN") that occurred at the child switch and a topology change event (e.g., "SW_STP_TOPO_CHANGED") that occurred at the core switch on or near the same period of time as the networking loop event.

Based on the correlated network data, loop troubleshooting module 354 may determine that the network event that occurred at the core switch is a cause of the networking loop experienced by the APs, and perform an action, such as generating and sending a notification that includes an indication of the root cause of the networking loop and/or a recommendation to remedy the networking loop (e.g., suggestion_number 28989), and/or automatically perform a remedial action to mitigate or resolve issues of the networking loop, such as configuring operation of the one or more upstream network devices to the AP (e.g., correcting port flapping issue), resetting or restarting the one or more upstream network devices, invoking downloading of new software to the upstream network device, etc. These actions are given for example purposes only, and the disclosure is not limited in this respect.

In some examples, loop troubleshooting module 354 may determine a pattern of the one or more network events over time in a time window, wherein the time window advances with respect to time. For example, loop troubleshooting module 354 may determine the pattern of one or more network events within a time window preceding a present time, and as the present time advances, loop troubleshooting module 354 may update the pattern to include one or more network events that occur as time advances, and exclude from the pattern one or more network events that fall outside of the time window as time advances. In other words, the time window may represent a rolling time window that represents a constant amount of time (e.g., one minute, one hour, or any other constant amount of time), but advances with the present time. This means that if the network worsens or improves over time, loop troubleshooting module 354 may continuously monitor the health of the network by analyzing the one or more network events within the rolling time window.

In some examples, to correlate in time the pattern of the one or more network events to a networking loop event, loop troubleshooting module 354 may execute one or more models (e.g., machine learning (ML) model 380) using the network data as inputs. Loop troubleshooting module 354 may determine that the networking loop event is associated with a trend in one or more network events that indicates a worsening network condition. Based on determining this correlation, loop troubleshooting module 354 may determine an instance of a network event that occurred at the upstream network device (e.g., port switching from up state to a down state) as a cause of a networking loop that has occurred or will occur at an AP communicatively coupled to the upstream network device.

In some examples, ML model 380 may comprise a ML model that is trained using supervised or unsupervised machine learning techniques applied to training data comprising pre-collected, labeled network data received from network devices (e.g., UEs, APs, switches and/or other network nodes), to identify root causes of networking loops that occurred or may occur at the access point. ML model 380 may comprise one of a neural network, logistical regression, naive Bayesian, support vector machine (SVM), or the like.

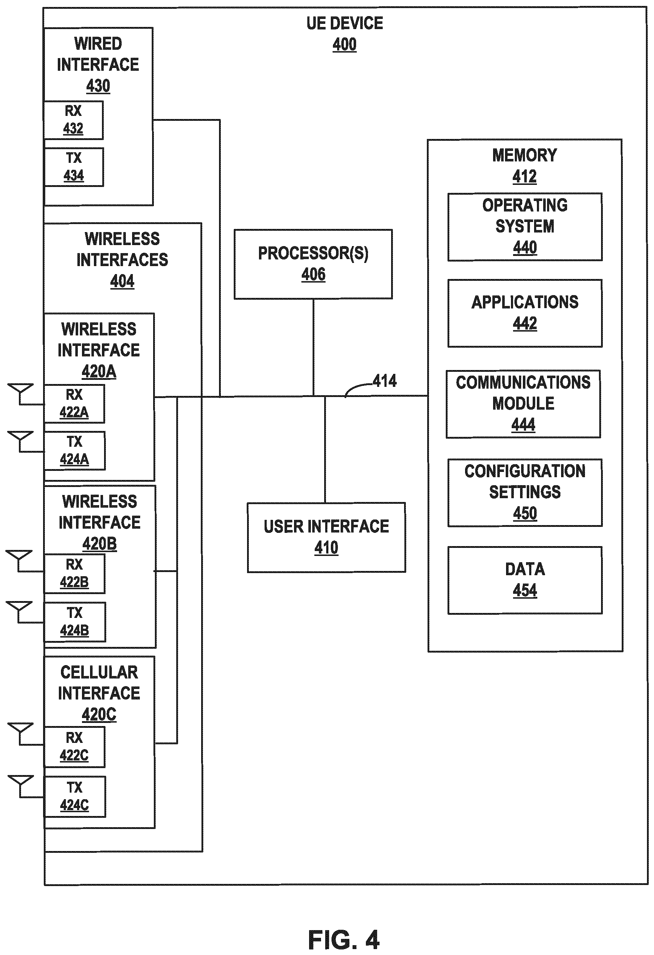

FIG. 4 shows an example user equipment device 400. Example UE 400 shown in FIG. 4 may represent an example implementation of any of UEs 148 as shown and described herein with respect to FIG. 1A. UE 400 may include any type of wireless client device, and the disclosure is not limited in this respect. For example, UE 400 may include a mobile device such as a smart phone, tablet or laptop computer, a personal digital assistant (PDA), a wireless terminal, a smart watch, a smart ring or any other type of mobile or wearable device. UE 400 may also include any type of IoT device such as a printer, a security sensor or device, an environmental sensor, or any other connected device configured to communicate over one or more wireless networks. In some examples, the UE 400 may be referred to as a "user device" and/or client device.

In accordance with one or more techniques of the disclosure, network data (e.g., client identifier, AP identifier, RSSI measurements) may be stored in client device memory 412 as network data 454 and transmitted directly to NMS 150/300 or via one or more AP devices 106 in the wireless network. In some examples, NMS 150 receives relevant network data from UEs 148 on a continuous or intermittent basis.

Network data 454 may include, for example, RSSI measurements of one or more wireless signals received from one or more AP devices by UE 400 as measured by the AP devices. Network data 454 may further include a log of STP messages, a log of broadcast discovery or registration messages, or other data. The network data may include one or more feedback responses from a client device application feedback prompt presented to a user by an application via a client device user interface.

UE 400 includes a wired interface 430, wireless interfaces 420A-420C, one or more processor(s) 406, memory 412, and a user interface 410. The various elements are coupled together via a bus 414 over which the various elements may exchange data and information. Wired interface 430 includes a receiver 432 and a transmitter 434. Wired interface 430 may be used, if desired, to physically couple UE 400 to a network device to access network(s) 134 of FIG. 1A. Interfaces 420A, 420B, and 420C include receivers 422A, 422B, and 422C, respectively, each including a receive antenna via which UE 400 may receive wireless signals from wireless communications devices, such as AP devices 106 of FIG. 1A, AP 200 of FIG. 2, other UEs 148, or other devices configured for wireless communication. Interfaces 420A, 420B, and 420C further include transmitters 424A, 424B, and 424C, respectively, each including transmit antennas via which UE 400 may transmit wireless signals to wireless communications devices, such as AP devices 106 of FIG. 1A, AP 200 of FIG. 2, other UEs 148 and/or other devices configured for wireless communication. In some examples, wireless interface 420A may include a Wi-Fi 802.11 interface (e.g., 2.4 GHz and/or 5 GHz) and wireless interface 420B may include a Bluetooth interface and/or a Bluetooth Low Energy interface. Cellular interface 420C may include, for example, a cellular interface through which UE 400 may connect to a cellular network.

Processor(s) 406 execute software instructions, such as those used to define a software or computer program. Software instructions may be stored to a computer-readable storage medium (such as memory 412), such as non-transitory computer-readable media including a storage device (e.g., a disk drive, or an optical drive) or a memory (such as Flash memory or RAM) or any other type of volatile or non-volatile memory, that stores instructions to cause the one or more processors 406 to perform the techniques described herein. Software instructions may also or alternatively be provided to the processor via a computer readable transmission medium (such as bus 414, wired interface 430 and/or wireless interface 404/420), that conveys instructions to cause the one or more processors 406 to perform one or more of the techniques described herein.

Memory 412 includes one or more devices configured to store programming modules and/or data associated with operation of UE 400. For example, memory 412 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage for network data 454. Data storage for network data 454 may include, for example, a status/error log including network data specific to UE 400. As described above, network data 454 may include any network data, events, and/or states that may be related to determination of networking loop. Network data 454 may include event data such as a log of normal events and error events according to a logging level based on instructions from the network management system (e.g., NMS 150/300). Data storage for network data 454 may store any data used and/or generated by UE 400, such as network data that is collected by UE 400 and transmitted to any of APs 106 in a wireless network for further transmission to NMS 150. In some examples, the UE 400 reports user impact data to the NMS 150, such as via APs 106 or via APIs. In some examples, UE 400 includes an NMS agent (not shown) that communicates with NMS 150 using APIs. In some examples, network data 454 may include information indicative of a networking loop experienced by an AP that is communicatively coupled to UE 400, such as an increase in bandwidth of interface traffic.

Communications module 444 includes program code that, when executed by processor(s) 406, enables UE 400 to communicate using any of wired interface(s) 430, wireless interfaces 420A-420B and/or cellular interface 420C. Configuration settings 450 include any device settings for client device 400 settings for each of wireless interface(s) 420A-420B and/or cellular interface 420C.

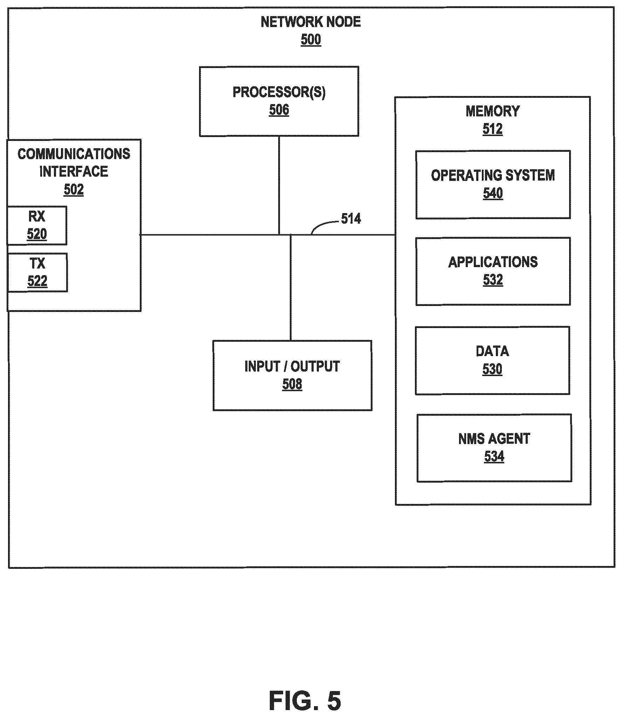

FIG. 5 is a block diagram illustrating an example network node 500 configured according to the techniques described herein. In one or more examples, network node 500 may represent an example implementation of a network device or server attached to network 134 of FIG. 1A (e.g., router 108, switch 104, AAA server 110, DHCP server 116, DNS server 122, VNA 133, servers 128, etc.).

In this example, network node 500 includes a communications interface 502, e.g., an Ethernet interface, a processor 506, input / output 508 (e.g., display, buttons, keyboard, keypad, touch screen, mouse, etc.), a memory 512 and an assembly of components 516, e.g., assembly of hardware module, e.g., assembly of circuits, coupled together via a bus 514 over which the various elements may interchange data and information. Communications interface 502 couples network node 500 to a network, such as an enterprise network.

Though only one interface is shown by way of example, network node 500 may include multiple communication interfaces. Communications interface 502 includes a receiver 520 via which network node 500 can receive data and information. Communications interface 502 includes a transmitter 522, via which network node 500 can send data and information (e.g., including configuration information, authentication information, web page data, etc.).

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired communications interface 502 to one or more APs or other wired client-side devices, e.g., switches, routers and/or IoT devices, within a wired network edge. For example, network node 500 may include multiple wired communication interfaces 502 and/or wired communication interface 502 may include multiple physical ports to connect to multiple APs or the other devices within a site via respective Ethernet cables. In some examples, each of the APs or other wired devices connected to network node 500 may access the wired network via wired communication interface 502 of network node 500. In some examples, one or more of the APs or other wired devices connected to network node 500 may each draw power from network node 500 via the respective Ethernet cable and a Power over Ethernet (PoE) port of wired communication interface 502.

Memory 512 stores executable software applications 532, operating system 540 and data/information 530. Data 530 includes system log and/or error log that stores network data and/or proximity information for network node 500 and/or other devices, such as wireless access points, based on a logging level according to instructions from the network management system. In some examples, network data included in data 530 also may include network traffic impact data from network devices, for example, the packets dropped at certain switch ports due to congestion. Network node 500 may, in some examples, forward the network data to a network management system (e.g., NMS 150 of FIG. 1A) for analysis as described herein.

The data collected and reported by network node 500 may include periodically-reported data and event-driven data. In some examples, network node 500 is configured to collect statistics and/or sample other data according to a periodic interval. Network node 500 may store the collected and sampled data, e.g., in a buffer. In some examples, NMS agent 534 may periodically create a package of the statistical data according to a periodic interval. In some examples, the package of statistical data may also include details about clients connected to network node 500. NMS agent 534 may then report the package of statistical data to NMS 150 in the cloud. In other examples, NMS 150 may request, retrieve, or otherwise receive the package of statistical data from network node 500 via an API, an open configuration protocol, or another of communication protocols. The package of statistical data created by NMS agent 534 or another module of network node 500 may include a header identifying network node 500 and the statistics and data samples for each of the logical paths from network node 500. In still other examples, NMS agent 534 reports event data to NMS 150 in the cloud in response to the occurrence of certain events at network node 500 as the events happen.

In some examples, data 530 may include information indicative of network performance, connectivity, status, and/or other information indicative of a network event or issue of network node 500. For example, data 530 of network node 500 may include data indicative of the connectivity of network node to other network devices, such as information identifying the devices connected to network node 500, a connectivity status to the other devices, port status of network node 500, network telemetry data of connections of network node 500, configuration information associated with a software configuration of network node 500 (e.g., firmware configuration status), information associated with a network topology configuration of network node 500 (e.g., port configuration, VLAN configuration, etc.), and/or other information indicative of a network event or issue of network node 500.

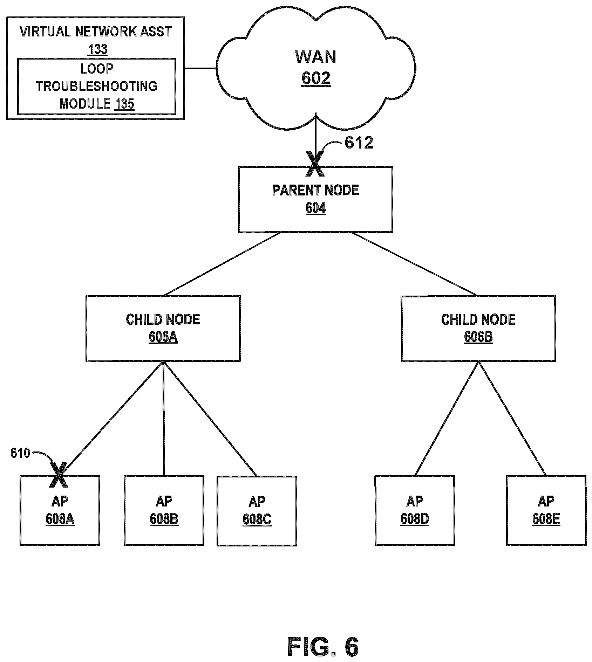

FIG. 6 is an example of determining a VLAN configuration issue of an upstream network device to an AP is a root cause of a networking loop that occurred at the AP, in accordance with one or more techniques of this disclosure. FIG. 6 is described and illustrated with respect to NMS 150 of FIG. 1A.

In the example of FIG. 6, a network system may include a hierarchical network architecture that includes WAN 602, parent node 604, child nodes 606A-606B, and APs 608A-608E. Parent node 604 is communicatively coupled to WAN 602 and child nodes 606A-606B. Parent node 604 may represent, for example, a core switch, such as switch 104A of FIG. 1A. In some examples, parent node 604 may represent a gateway device, such as router 108A of FIG. 1A. Child nodes 606A-606B are communicatively coupled to parent node 604 and APs 608A-608E, respectively. Child nodes 606A-606B may each represent, for example, a leaf switch, such as switches 104B and 104C of FIG. 1A. APs 608A-608E are communicatively coupled to child nodes 606A-606B, respectively, and may each represent, for example, one of APs 106 of FIG. 1A.

In the example of FIG. 6, a networking loop event 610 may occur at AP 608A. For example, NMS 150 or AP 608A may determine, based on monitoring network traffic of AP 608A, that AP 608A received an inbound network packet that AP 608A previously forwarded.

NMS 150 may obtain network data of one or more upstream devices to AP 608A, such as child node 606A and/or parent node 604 that occurred on or near the same period of time as networking loop event 610. In this example, NMS 150 may obtain network data indicative of a VLAN configuration event 612 (e.g., VLAN configuration status information indicative of a VLAN configuration issue) that occurred at parent node 604 that caused network traffic from AP 608A to be sent into WAN 602 to be sent back to AP 608A.

Loop troubleshooting module 135 may correlate network data associated with VLAN configuration event 612 of parent node 604 and network data associated with networking loop event 610 of AP 608A and determine whether VLAN configuration event 612 of parent node 604 is a root cause of networking loop event 610 of AP 608A. Based on the correlated network data, loop troubleshooting module 135 may determine that the root cause of networking loop event 610 of AP 608A is the VLAN configuration event 612 of parent node 604. In response to determining that the VLAN configuration event 612 of parent node 604 is the root cause of networking loop event 610, loop troubleshooting module 135 may perform an action, such as generating and sending a notification that includes an indication of the root cause of the networking loop (e.g., VLAN configuration issue of parent node 604) and/or a recommendation to remedy the networking loop (e.g., recommendation to correct VLAN configuration of parent node 604), and/or automatically perform a remedial action to mitigate or resolve issues of the networking loop, such as configuring operation of parent node 604, resetting or restarting parent node 604, invoking downloading of new software to parent node 604, etc.

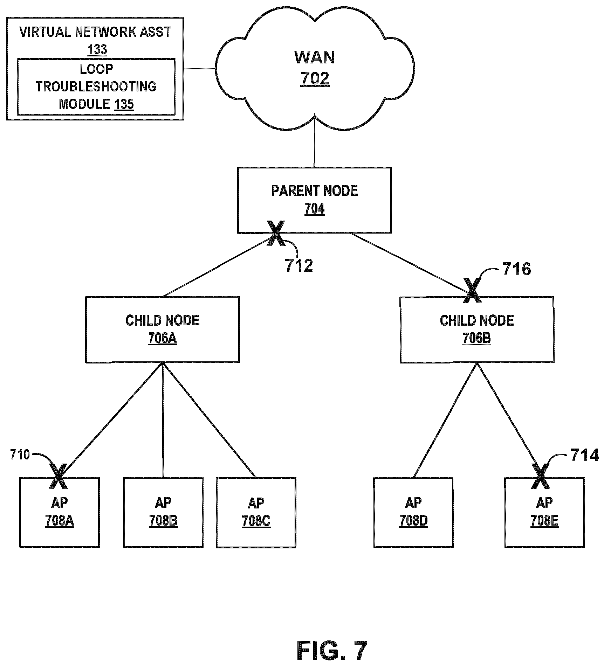

FIG. 7 is an example of determining a port flapping issue of an upstream network device to an AP is a root cause of a networking loop that occurred at the AP, in accordance with one or more techniques of this disclosure. FIG. 7 is described and illustrated with respect to NMS 150 of FIG. 1A.

In the example of FIG. 7, a network system may include a hierarchical network architecture that includes WAN 702, parent node 704, child nodes 706A-706B, and APs 708A-708E. Parent node 704 is communicatively coupled to WAN 702 and child nodes 706A-706B. Parent node 704 may represent, for example, a core switch, such as switch 104A of FIG. 1A. In some examples, parent node 704 may represent a gateway device, such as router 108A of FIG. 1A. Child nodes 706A-706B are communicatively coupled to parent node 704 and APs 708A-708E, respectively. Child nodes 706A-706B may each represent, for example, a leaf switch, such as switches 104B and 104C of FIG. 1A. APs 708A-708E are communicatively coupled to child nodes 706A-706B, respectively, and may each represent, for example, one of APs 106 of FIG. 1A.

In the example of FIG. 7, networking loop event 710 may occur at AP 708A and a networking loop event 714 may occur at AP 708E. For example, NMS 150 or AP 708A may determine, based on monitoring network traffic of AP 708A, that AP 708A received an inbound network packet that AP 708A previously forwarded. Similarly, NMS 150 or AP 708E may determine, based on monitoring network traffic of AP 708E, that AP 708E received an inbound network packet that AP 708E previously forwarded.

NMS 150 may obtain network data of one or more upstream devices to AP 708A, such as child node 706A and/or parent node 704 that occurred on or near the same period of time as networking loop event 710. NMS 150 may also obtain network data of one or more upstream devices to AP 708E, such as child node 706B and/or parent node 704 that occurred on or near the same period of time as networking loop event 714. In this example, NMS 150 may obtain network data indicative of a port flapping event 712 (e.g., port status information indicative of a port flapping issue) that occurred at parent node 704 that caused network traffic from AP 708A to be sent back to AP 708A. Similarly, NMS 150 may obtain network data indicative of a port flapping event 716 that occurred at child node 706B that caused network traffic from AP 708E to be sent back to AP 708E.

Loop troubleshooting module 135 may correlate network data associated with port flapping event 712 of parent node 704 and network data associated with networking loop event 710 of AP 708A and determine whether port flapping event 712 of parent node 704 is a root cause of networking loop event 710 of AP 708A. Similarly, loop troubleshooting module 135 may correlate network data associated with port flapping event 716 of child node 706B and network data associated with networking loop event 714 of AP 708E and determine whether port flapping event 716 of child node 706B is a root cause of networking loop event 714 of AP 708E.

Based on the correlated network data, loop troubleshooting module 135 may determine that the port flapping event 712 of parent node 704 is the root cause of networking loop event 710 of AP 708A and/or determine that the port flapping event 716 of child node 706 is the root cause of networking loop event 714 of AP 708E. In response to determining that the port flapping event 712 is the root cause of networking loop event 710 and/or determining that the port flapping event 716 is the root cause of networking loop event 714, loop troubleshooting module 135 may perform an action, such as generating and sending a notification that includes an indication of the root cause of the networking loop (e.g., port flapping issue of parent node 704 and/or port flapping issue of child node 706B) and/or a recommendation to remedy the networking loop (e.g., recommendation to correct port configuration of parent node 704 and/or child node 706B), and/or automatically perform a remedial action to mitigate or resolve issues of the networking loop, such as configuring operation of parent node 704 and/or child node 706B, resetting or restarting parent node 704 and/or child node 706B, invoking downloading of new software to parent node 704 and/or child node 706B, etc.

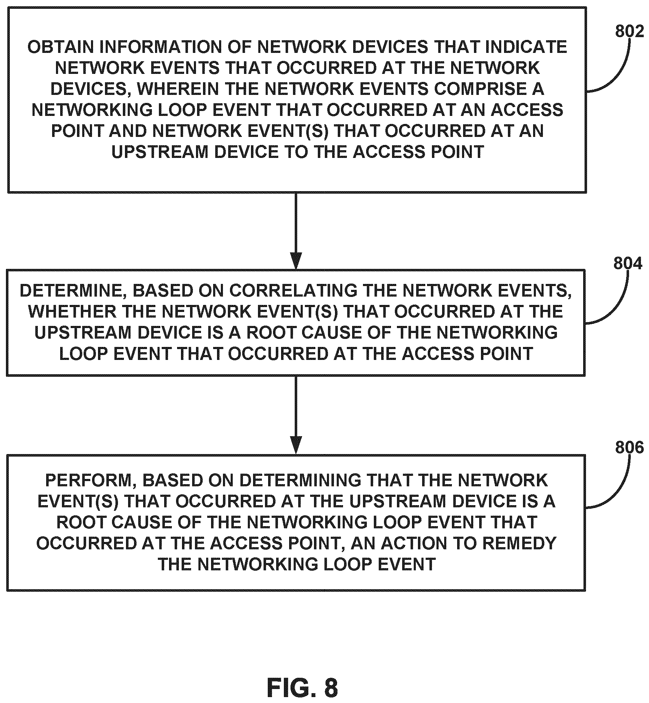

FIG. 8 is a flow chart illustrating an operation of a NMS configured to determine a root cause of a networking loop that occurred at an AP based on one or more network events of an upstream network device to the AP, in accordance with one or more techniques of this disclosure. For convenience, FIG. 8 is described with respect to network system 100 of FIG. 1A. However, the techniques of FIG. 8 may be performed by different components of network system 100 or by additional or alternative devices.

NMS 150 may obtain information of a plurality of network devices that indicate a plurality of network events that occurred at the plurality of network devices (802). In some examples, the information may include a networking loop event that occurred at an access point and one or more network events that occurred at an upstream device to the access point. For example, the one or more events that occurred at the upstream device may comprise a status of a port of the upstream device, a status of configuration of the upstream device, a status of connectivity of the upstream device, and/or other network data of the upstream device that may be a cause of the networking loop that occurred at the access point.

NMS 150 may determine, based on correlating the plurality of network events, whether the one or more network events that occurred at the upstream device is a root cause of the networking loop event that occurred at the access point (804). For example, NMS 150 may determine, based on a networking graph of the hierarchical network, that the upstream device is communicatively coupled to the access point. NMS 150 may determine, based on comparing a first period of time of the one or more network events that occurred at the upstream device and a second period of time of the networking loop event that occurred at the access point, whether the first period of time matches the second period of time. In some examples, NMS 150 may correlate the one or more network events that occurred at the upstream device with the networking loop event based on determining that the one or more network events of the upstream device occurred at a same or similar period of time as the networking loop event that occurred at the access point.

NMS 150 may perform, based on determining that the one or more network events that occurred at the upstream device is a root cause of the networking loop event that occurred at the access point, an action to remedy the networking loop event (806). For example, NMS 150 may generate and send a notification that includes an indication of the root cause of the networking loop and/or automatically performing a remedial action to mitigate or resolve issues of the networking loop, such as configuring operation of one or more upstream network devices of the AP that experienced the AP loop or restarting the one or more upstream network devices.

The techniques described herein may be implemented using software, hardware and/or a combination of software and hardware. Various examples are directed to apparatus, e.g., mobile nodes, mobile wireless terminals, base stations, e.g., access points, communications system. Various examples are also directed to methods, e.g., method of controlling and/or operating a communications device, e.g., wireless terminals (UEs), base stations, control nodes, access points and/or communications systems. Various examples are also directed to machine, e.g., computer readable medium, which include machine readable instructions for controlling a machine to implement one or more operations of a method. A computer readable medium may be provided as a computer readable storage medium and/or a computer readable transmission medium. Such a computer-readable storage medium may be referred to as a non-transitory computer-readable medium. Examples of a computer-readable storage medium may include a CD, a DVD, a storage device (such as a hard disc drive), a diskette, a tape, flash memory, physical memory (whether ROM or RAM), or any other computer-readable storage medium. As mentioned, a computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The specific order or hierarchy of steps in the processes disclosed is an example of example approaches. Based upon design preferences, the specific order or hierarchy of steps in the processes may be rearranged while remaining within the scope of the present disclosure. The accompanying method claims present elements of the various steps in a sample order and are not meant to be limited to the specific order or hierarchy presented.

In various examples devices and nodes described herein are implemented using one or more modules to perform the steps corresponding to one or more methods, for example, signal generation, transmitting, processing, and/or receiving steps. Thus, in some examples various features are implemented using modules. Such modules may be implemented using software, hardware or a combination of software and hardware. In some examples each module is implemented as an individual circuit with the device or system including a separate circuit for implementing the function corresponding to each described module. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various examples are directed to a machine-readable medium e.g., a computer readable medium, including machine executable instructions for causing a machine, e.g., processor and associated hardware, to perform one or more of the steps of the above-described method(s). Some examples are directed to a device including a processor configured to implement one, multiple, or all of the steps of one or more methods of the one example aspect.

In some examples, the processor or processors, e.g., CPUs, of one or more devices, e.g., communications devices such as wireless terminals (UEs), and/or access nodes, are configured to perform the steps of the methods described as being performed by the devices. The configuration of the processor may be achieved by using one or more modules, e.g., software modules, to control processor configuration and/or by including hardware in the processor, e.g., hardware modules, to perform the recited steps and/or control processor configuration. Accordingly, some but not all examples are directed to a communications device, e.g., user equipment, with a processor which includes a module corresponding to each of the steps of the various described methods performed by the device in which the processor is included. In some but not all examples a communications device includes a module corresponding to each of the steps of the various described methods performed by the device in which the processor is included. The modules may be implemented purely in hardware, e.g., as circuits, or may be implemented using software and/or hardware or a combination of software and hardware.

Some examples are directed to a computer program product comprising a computer-readable medium comprising code for causing a computer, or multiple computers, to implement various functions, steps, acts and/or operations, e.g., one or more steps described above. In some examples, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some examples are directed to a processor configured to implement one or more of the various functions, steps, acts and/or operations of one or more methods described above. Accordingly, some examples are directed to a processor, e.g., CPU, graphical processing unit (GPU), digital signal processing (DSP) unit, etc., configured to implement some or all of the steps of the methods described herein. The processor may be for use in, e.g., a communications device or other device described in the present application.

Numerous additional variations on the methods and apparatus of the various examples described above will be apparent to those skilled in the art in view of the above description. Such variations are to be considered within the scope of this disclosure. The methods and apparatus may be, and in various examples are, used with BLE, LTE, CDMA, orthogonal frequency division multiplexing (OFDM), and/or various other types of communications techniques which may be used to provide wireless communications links between access nodes and mobile nodes. In some examples the access nodes are implemented as base stations which establish communications links with user equipment devices, e.g., mobile nodes, using OFDM and/or CDMA. In various examples the mobile nodes are implemented as notebook computers, personal data assistants (PDAs), or other portable devices including receiver/transmitter circuits and logic and/or routines, for implementing the methods.

In the detailed description, numerous specific details are set forth in order to provide a thorough understanding of some examples. However, some examples may be practiced without these specific details. In other instances, well-known methods, procedures, components, units and/or circuits have not been described in detail for simplicity.

Some examples may be used in conjunction with various devices and systems, for example, a User Equipment (UE), a Mobile Device (MD), a wireless station (STA), a wireless terminal (WT), a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some examples may be used in conjunction with devices and/or networks operating in accordance with existing Wireless-Gigabit-Alliance (WGA) specifications (Wireless Gigabit Alliance, Inc. WiGig MAC and PHY Specification Version 1.1, April 2011, Final specification) and/or future versions and/or derivatives thereof, devices and/or networks operating in accordance with existing IEEE 802.11 standards (IEEE 802.11-2012, IEEE Standard for Information technology--Telecommunications and information exchange between systems Local and metropolitan area networks--Specific requirements Part 11: Wireless LAN Medium Access Control (MAC) and Physical Layer (PHY) Specifications, March 29, 2012; IEEE802.11ac-2013 ("IEEE P802.11ac-2013, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 4: Enhancements for Very High Throughput for Operation in Bands below 6GHz", December, 2013); IEEE 802.11ad ("IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60 GHz Band", 28 December, 2012); IEEE-802.11REVmc ("IEEE 802.11-REVmcTM/D3.0, June 2014 draft standard for Information technology - Telecommunications and information exchange between systems Local and metropolitan area networks Specific requirements; Part 11: Wireless LAN Medium Access Control (MAC) and Physical Layer (PHY) Specification"); IEEE802.11-ay (P802.11ay Standard for Information Technology--Telecommunications and Information Exchange Between Systems Local and Metropolitan Area Networks--Specific Requirements Part 11: Wireless LAN Medium Access Control (MAC) and Physical Layer (PHY) Specifications--Amendment: Enhanced Throughput for Operation in License-Exempt Bands Above 45 GHz)), IEEE 802.11-2016 and/or future versions and/or derivatives thereof, devices and/or networks operating in accordance with existing Wireless Fidelity (Wi-Fi) Alliance (WFA) Peer-to-Peer (P2P) specifications (Wi-Fi P2P technical specification, version 1.5, August 2014) and/or future versions and/or derivatives thereof, devices and/or networks operating in accordance with existing cellular specifications and/or protocols, e.g., 3rd Generation Partnership Project (3GPP), 3GPP Long Term Evolution (LTE) and/or future versions and/or derivatives thereof, units and/or devices which are part of the above networks, or operate using any one or more of the above protocols, and the like.

Some examples may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some examples may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth , Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G), or Sixth Generation (6G) mobile networks, 3GPP, Long Term Evolution (LTE), LTE advanced, Enhanced Data rates for GSM Evolution (EDGE), or the like. Other examples may be used in various other devices, systems and/or networks.

Some demonstrative examples may be used in conjunction with a WLAN (Wireless Local Area Network), e.g., a Wi-Fi network. Other examples may be used in conjunction with any other suitable wireless communication network, for example, a wireless area network, a "piconet", a WPAN, a WVAN, and the like.

Some examples may be used in conjunction with a wireless communication network communicating over a frequency band of 2.4Ghz, 5 GHz and/or 60 GHz. However, other examples may be implemented utilizing any other suitable wireless communication frequency band(s), for example, an Extremely High Frequency (EHF) band (the millimeter wave (mmWave) frequency band), e.g., a frequency band within the frequency band of between 20GhH and 300GHz, a WLAN frequency band, a WPAN frequency band, a frequency band according to the WGA specification, and the like.

While the above provides just some simple examples of the various device configurations, it is to be appreciated that numerous variations and permutations are possible. Moreover, the technology is not limited to any specific channels, but is generally applicable to any frequency range(s)/channel(s). Moreover, and as discussed, the technology may be useful in the unlicensed spectrum.

Although examples are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, a communication system or subsystem, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although examples are not limited in this regard, the terms "plurality" and "a plurality" as used herein may include, for example, "multiple" or "two or more." The terms "plurality" or "a plurality" may be used throughout the specification to describe two or more components, devices, elements, units, parameters, circuits, or the like. For example, "a plurality of stations" may include two or more stations.

It may be advantageous to set forth definitions of certain words and phrases used throughout this document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, interconnected with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, circuitry, firmware or software, or some combination of at least two of the same. The functionality associated with any particular controller may be centralized or distributed, whether locally or remotely. Definitions for certain words and phrases are provided throughout this document and those of ordinary skill in the art should understand that in many, if not most instances, such definitions apply to prior, as well as future uses of such defined words and phrases.

The examples have been described in relation to communications systems, as well as protocols, techniques, means and methods for performing communications, such as in a wireless network, or in general in any communications network operating using any communications protocol(s). Examples of such are home or access networks, wireless home networks, wireless corporate networks, and the like. In general, the systems, methods and techniques disclosed herein will work equally well for other types of communications environments, networks and/or protocols.

For purposes of explanation, numerous details are set forth to provide a thorough understanding of the present techniques. The present disclosure may be practiced in a variety of ways beyond the specific details set forth herein. Furthermore, while the examples illustrated herein show various components of the system collocated, the various components of the system can be located at distant portions of a distributed network, such as a communications network, node, within a Domain Master, and/or the Internet, or within a dedicated secured, unsecured, and/or encrypted system and/or within a network operation or management device that is located inside or outside the network. As an example, a Domain Master can also be used to refer to any device, system or module that manages and/or configures or communicates with any one or more aspects of the network or communications environment and/or transceiver(s) and/or stations and/or access point(s) described herein.

Thus, the components of the system can be combined into one or more devices, or split between devices, such as a transceiver, an access point, a station, a Domain Master, a network operation or management device, a node or collocated on a particular node of a distributed network, such as a communications network. For reasons of computational efficiency, the components of the system can be arranged at any location within a distributed network without affecting the operation thereof. For example, the various components can be located in a Domain Master, a node, a domain management device, such as a MIB, a network operation or management device, a transceiver(s), a station, an access point(s), or some combination thereof. Similarly, one or more of the functional portions of the system could be distributed between a transceiver and an associated computing device/system.

Furthermore, the various links, including any communications channel(s)/elements/lines connecting the elements, can be wired or wireless links or any combination thereof, or any other known or later developed element(s) capable of supplying and/or communicating data to and from the connected elements. The term module as used herein can refer to any known or later developed hardware, circuitry, software, firmware, or combination thereof, that is capable of performing the functionality associated with that element. The terms determine, calculate, and compute and variations thereof, as used herein are used interchangeable and include any type of methodology, process, technique, mathematical operational or protocol.

Moreover, while some of the examples described herein are directed toward a transmitter portion of a transceiver performing certain functions, or a receiver portion of a transceiver performing certain functions, this disclosure applies to include corresponding and complementary transmitter-side or receiver-side functionality, respectively, in both the same transceiver and/or another transceiver(s), and vice versa.

The examples are described in relation to enhanced communications. However, that in general, the systems and methods herein will work equally well for any type of communication system in any environment utilizing any one or more protocols including wired communications, wireless communications, powerline communications, coaxial cable communications, fiber optic communications, and the like.

The example systems and methods are described in relation to IEEE 802.11 and/or Bluetooth^{®} and/or Bluetooth^{®} Low Energy transceivers and associated communication hardware, software, and communication channels. However, to avoid unnecessarily obscuring the present disclosure, the following description omits well-known structures and devices that may be shown in block diagram form or otherwise summarized.

While the above-described flowcharts have been discussed in relation to a particular sequence of events, changes to this sequence can occur without materially effecting the operation of the example(s). Additionally, the example techniques illustrated herein are not limited to the specifically illustrated examples but can also be utilized with the other examples and each described feature is individually and separately claimable.

The above-described system can be implemented on a wireless telecommunications device(s)/system, such an IEEE 802.11 transceiver, or the like. Examples of wireless protocols that can be used with this technology include IEEE 802.11a, IEEE 802.11b, IEEE 802.11g, IEEE 802.11n, IEEE 802.11ac, IEEE 802.11ad, IEEE 802.11af, IEEE 802.11ah, IEEE 802.11ai, IEEE 802.11aj, IEEE 802.11aq, IEEE 802.11ax, Wi-Fi, LTE, 4G, Bluetooth^{®}, WirelessHD, WiGig, WiGi, 3GPP, Wireless LAN, WiMAX, DensiFi SIG, Unifi SIG, 3GPP LAA (licensed-assisted access), and the like.

Additionally, the systems, methods and protocols can be implemented to improve one or more of a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, a modem, a transmitter/receiver, any comparable means, or the like. In general, any device capable of implementing a state machine that is in turn capable of implementing the methodology illustrated herein can benefit from the various communication methods, protocols, and techniques according to the disclosure provided herein.

Examples of the processors as described herein may include, but are not limited to, at least one of Qualcomm^{®} Snapdragon^{®} 800 and 801, Qualcomm^{®} Snapdragon^{®} 610 and 615 with 4G LTE Integration and 64-bit computing, Apple^{®} A7 processor with 64-bit architecture, Apple^{®} M7 motion coprocessors, Samsung^{®} Exynos^{®} series, the Intel^{®} Core^{™} family of processors, the Intel^{®} Xeon^{®} family of processors, the Intel^{®} Atom^{™} family of processors, the Intel Itanium^{®} family of processors, Intel^{®} Core^{®} i5-4670K and i7-4770K 22nm Haswell, Intel^{®} Core^{®} i5-3570K 22nm Ivy Bridge, the AMD^{®} FX^{™} family of processors, AMD^{®} FX-4300, FX-6300, and FX-8350 32nm Vishera, AMD^{®} Kaveri processors, Texas Instruments^{®} Jacinto C6000^{™} automotive infotainment processors, Texas Instruments^{®} OMAP^{™} automotive-grade mobile processors, ARM^{®} Cortex^{™}-M processors, ARM^{®} Cortex-A and ARM926EJ-S^{™} processors, Broadcom^{®} AirForce BCM4704/BCM4703 wireless networking processors, the AR7100 Wireless Network Processing Unit, other industry-equivalent processors, and may perform computational functions using any known or future-developed standard, instruction set, libraries, and/or architecture.

Furthermore, the disclosed methods may be readily implemented in software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with the examples is dependent on the speed and/or efficiency requirements of the system, the particular function, and the particular software or hardware systems or microprocessor or microcomputer systems being utilized. The communication systems, methods and protocols illustrated herein can be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed techniques may be readily implemented in software and/or firmware that can be stored on a storage medium to improve the performance of a programmed general-purpose computer with the cooperation of a controller and memory, a special purpose computer, a microprocessor, or the like. In these instances, the systems and methods can be implemented as program embedded on personal computer such as an applet, JAVA or CGI script, as a resource residing on a server or computer workstation, as a routine embedded in a dedicated communication system or system component, or the like. The system can also be implemented by physically incorporating the system and/or method into a software and/or hardware system, such as the hardware and software systems of a communications transceiver.

This disclosure describes systems and methods for enhancing and improving troubleshooting and remediating issues with network devices. Many alternatives, modifications and variations would be or are apparent to those of ordinary skill in the applicable arts. Accordingly, this disclosure applies to all such alternatives, modifications, equivalents, and variations that are within the spirit and scope of this disclosure.

Therefore, from one perspective, there have been described techniques for determining a root cause of a networking loop that occurred at one or more access points. The techniques include a network management system (NMS) configured to obtain information of a plurality of network devices that indicate a plurality of network events comprising at least a networking loop event that occurred at an access point of the plurality of network devices and one or more network events that occurred at an upstream device to the access point; determine, based on correlating the plurality of network events, whether the one or more network events that occurred at the upstream device is a root cause of the networking loop event; and perform, based on determining that the one or more network events that occurred at the upstream device is a root cause of the networking loop event, an action to remedy the networking loop event.

Further examples of feature combinations taught by the present disclosure are set out in the following numbered clauses.

Clause 1. A network management system (NMS) comprising: memory; and one or more processors coupled to the memory, the one or more processors configured to: obtain information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point; determine, based on correlating the plurality of network events, whether the one or more network events that occurred at the upstream device is a root cause of the networking loop event that occurred at the access point; and perform, based on determining that the one or more network events that occurred at the upstream device is a root cause of the networking loop event that occurred at the access point, an action to remedy the networking loop event.

Clause 2. The NMS of clause 1, wherein the one or more network events that occurred at the upstream device comprises at least one of: a network event indicative of port flapping experienced by the upstream device; a network event indicative of a misconfigured or missing virtual local area network (VLAN); or a network event indicative of a topology change.

Clause 3. The NMS of clause 1 or 2, wherein the one or more network events that occurred at the upstream device comprises at least one of: a network event indicative of a status of a port of the upstream device; a network event indicative of a status of configuration of the upstream device; or a network event indicative of a status of connectivity of the upstream device.

Clause 4. The NMS of clause 1, 2 or 3, wherein the upstream device comprises at least one of: a leaf switch; a spine switch; or a gateway device.

Clause 5. The NMS of any of clauses 1 to 4, wherein, to determine, based on correlating the plurality of network events, whether the one or more network events that occurred at the upstream device is the root cause of the networking loop event that occurred at the access point, the one or more processors are configured to: determine, based on a networking graph of a network including the plurality of network devices, that the upstream device is communicatively coupled to the access point; and determine, based on comparing a first period of time of the one or more network events that occurred at the upstream device and a second period of time of the networking loop event that occurred at the access point, whether the first period of time matches the second period of time.

Clause 6. The NMS of any of clauses 1 to 5, wherein to perform the action to remedy the networking loop event, the one or more processors are configured to: send a notification specifying the one or more events that occurred at the upstream device is the root cause of the networking loop event that occurred at the access point.

Clause 7. The NMS of clause 6, wherein the notification includes a recommendation to remedy the networking loop event.

Clause 8. The NMS of any of clauses 1 to 7, wherein to perform the action to remedy the networking loop event, the one or more processors are configured to: automatically perform an action to remedy the one or more network events that occurred at the upstream device.

Clause 9. The NMS of clause 8, wherein to automatically perform the action to remedy the one or more network events that occurred at the upstream device, the one or more processors are configured to one or more of: send instructions to configure the upstream device to remedy the one or more network events that occurred at the upstream device; restart the upstream device; or reset the upstream device.

Clause 10. A method comprising: obtaining, by a network management system, information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point; determining, by the network management system and based on correlating the plurality of network events, whether the one or more network events that occurred at the upstream device is a root cause of the networking loop event that occurred at the access point; and performing, by the network management system and based on determining that the one or more network events that occurred at the upstream device is a root cause of the networking loop event that occurred at the access point, an action to remedy the networking loop event.

Clause 11. The method of clause 10, wherein the one or more network events that occurred at the upstream device comprises at least one of: a network event indicative of port flapping experienced by the upstream device; a network event indicative of a misconfigured or missing virtual local area network (VLAN); or a network event indicative of a topology change.

Clause 12. The method of clause 10 or 11, wherein the one or more network events that occurred at the upstream device comprises at least one of: a network event indicative of a status of a port of the upstream device; a network event indicative of a status of configuration of the upstream device; or a network event indicative of a status of connectivity of the upstream device.

Clause 13. The method of clause 10, 11 or 12, wherein the upstream device comprises at least one of: a leaf switch; a spine switch; or a gateway device.

Clause 14. The method of any of clauses 10 to 13, wherein determining, based on correlating the plurality of network events, whether the one or more network events that occurred at the upstream device is the root cause of the networking loop event that occurred at the access point comprises: determining, based on a networking graph of a network including the plurality of network devices, that the upstream device is communicatively coupled to the access point; and determining, based on comparing a first period of time of the one or more network events that occurred at the upstream device and a second period of time of the networking loop event that occurred at the access point, whether the first period of time matches the second period of time.

Clause 15. The method of any of clauses 10 to 14, wherein performing the action to remedy the networking loop event comprises: sending a notification specifying the one or more events that occurred at the upstream device is the root cause of the networking loop event that occurred at the access point.

Clause 16. The method of clause 15, wherein the notification includes a recommendation to remedy the networking loop event.

Clause 17. The method of any of clauses 10 to 16, wherein performing the action to remedy the networking loop event comprises: automatically performing an action to remedy the one or more network events that occurred at the upstream device.

Clause 18. The method of clause 17, wherein automatically performing the action to remedy the one or more network events that occurred at the upstream device comprises one or more of: sending instructions to configure the upstream device to remedy the one or more network events that occurred at the upstream device; restarting the upstream device; or resetting the upstream device.

Clause 19. Computer-readable media comprising instructions that, when executed by processing circuitry, cause the processing circuitry to: obtain information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point; determine, based on correlating the plurality of network events, whether the one or more network events that occurred at the upstream device is a root cause of the networking loop event that occurred at the access point; and perform, based on determining that the one or more network events that occurred at the upstream device is a root cause of the networking loop event that occurred at the access point, an action to remedy the networking loop event.

## Claims

1. A network management system, NMS, comprising:
memory; and
one or more processors coupled to the memory, the one or more processors configured to:
obtain information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point;
determine, based on correlating the plurality of network events, whether the one or more network events that occurred at the upstream device is a root cause of the networking loop event that occurred at the access point; and
perform, based on determining that the one or more network events that occurred at the upstream device is a root cause of the networking loop event that occurred at the access point, an action to remedy the networking loop event.

2. The NMS of claim 1, wherein the one or more network events that occurred at the upstream device comprises at least one of:
a network event indicative of port flapping experienced by the upstream device;
a network event indicative of a misconfigured or missing virtual local area network; or
a network event indicative of a topology change.

3. The NMS of any of claims 1-2, wherein the one or more network events that occurred at the upstream device comprises at least one of:
a network event indicative of a status of a port of the upstream device;
a network event indicative of a status of configuration of the upstream device; or
a network event indicative of a status of connectivity of the upstream device.

4. The NMS of any of claims 1-3, wherein the upstream device comprises at least one of:
a leaf switch;
a spine switch; or
a gateway device.

5. The NMS of any of claims 1-4, wherein, to determine, based on correlating the plurality of network events, whether the one or more network events that occurred at the upstream device is the root cause of the networking loop event that occurred at the access point, the one or more processors are configured to:
determine, based on a networking graph of a network including the plurality of network devices, that the upstream device is communicatively coupled to the access point; and
determine, based on comparing a first period of time of the one or more network events that occurred at the upstream device and a second period of time of the networking loop event that occurred at the access point, whether the first period of time matches the second period of time.

6. The NMS of any of claims 1-5, wherein to perform the action to remedy the networking loop event, the one or more processors are configured to:
send a notification specifying the one or more events that occurred at the upstream device is the root cause of the networking loop event that occurred at the access point.

7. The NMS of claim 6, wherein the notification includes a recommendation to remedy the networking loop event.

8. The NMS of any of claims 1-7, wherein to perform the action to remedy the networking loop event, the one or more processors are configured to:
automatically perform an action to remedy the one or more network events that occurred at the upstream device.

9. The NMS of claim 8, wherein to automatically perform the action to remedy the one or more network events that occurred at the upstream device, the one or more processors are configured to one or more of:
send instructions to configure the upstream device to remedy the one or more network events that occurred at the upstream device;
restart the upstream device; or
reset the upstream device.

10. A method comprising:
obtaining, by a network management system, information of a plurality of network devices that indicate a plurality of network events that occurred at the plurality of network devices, wherein the plurality of network events comprises at least a networking loop event that occurred at an access point of the plurality of network devices and one or more network events that occurred at an upstream device to the access point;
determining, by the network management system and based on correlating the plurality of network events, whether the one or more network events that occurred at the upstream device is a root cause of the networking loop event that occurred at the access point; and
performing, by the network management system and based on determining that the one or more network events that occurred at the upstream device is a root cause of the networking loop event that occurred at the access point, an action to remedy the networking loop event.

11. The method of claim 10, further comprising steps corresponding to the functionality of any of claims 2-9.

12. A computer-readable medium comprising instructions that, when executed by processing circuitry, cause the processing circuitry to become configured to carry out the method recited by any of claims 10-11.
